(19) Europäisches Patentamt
European Patent Office
Office européen des brevets

(11) EP 4 446 374 A1

# (12) EUROPEAN PATENT APPLICATION

published in accordance with Art. 153(4) EPC

(43) Date of publication:
**16.10.2024 Bulletin 2024/42**

(21) Application number: **22904548.9**

(22) Date of filing: **28.11.2022**

(51) International Patent Classification (IPC):
***C08K 5/00*** *(2006.01)* ***C08K 5/11*** *(2006.01)*
***C08K 5/12*** *(2006.01)* ***C08K 3/014*** *(2018.01)*
***C08L 27/06*** *(2006.01)*

(52) Cooperative Patent Classification (CPC):
**C08K 3/014; C08K 5/00; C08K 5/11; C08K 5/12; C08L 27/06**

(86) International application number:
**PCT/KR2022/018948**

(87) International publication number:
**WO 2023/106715 (15.06.2023 Gazette 2023/24)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **07.12.2021 KR 20210174062**

(71) Applicant: **Hanwha Solutions Corporation**
**Jung-gu**
**Seoul 04541 (KR)**

(72) Inventors:
- **YOO, Myung-Ik**
  **Daejeon 34128 (KR)**
- **KIM, Jaesong**
  **Daejeon 34128 (KR)**

(74) Representative: **Berggren Oy**
**P.O. Box 16**
**Eteläinen Rautatiekatu 10A**
**00101 Helsinki (FI)**

## (54) PLASTICIZER COMPOSITION AND VINYL CHLORIDE-BASED RESIN COMPOSITION COMPRISING SAME

(57) Provided are a plasticizer composition that exhibits excellent performances as a plasticizer and is environmentally friendly, and a vinyl chloride-based resin composition including the same. The plasticizer composition according to the present invention is not harmful to the human body because it does not include phthalate, and is able to reduce carbon emissions during a production process by including a recycled raw material. Further, the plasticizer composition of the present invention is excellent in both migration resistance and volatility resistance, and excellent in physical properties such as weather resistance to ultraviolet rays, a gelling rate, plasticization efficiency, etc., thereby being used as a general-purpose plasticizer.

EP 4 446 374 A1

## Description

[Technical Field]

Cross-reference to Related Application

The present application is based on, and claims priority from, Korean Patent Application No. 10-2021-0174062, filed on December 7, 2021, the disclosure of which is hereby incorporated by reference herein in its entirety.

The present invention relates to a plasticizer composition and a vinyl chloride-based resin composition including the same.

[Background Art]

Plasticizers, as polymer additives, are used to adjust hardness or ductility, to impart stain resistance, and to modify tensile properties (e.g., strength, elongation, or flexibility) and processability.

Phthalate-based plasticizers are representative plasticizers which have been most commonly used, because they have excellent compatibility with vinyl chloride resins, etc., and high plasticization efficiency, and exemplified by di-2-ethylhexyl phthalate (DEHP), diisononyl phthalate (DINP), di-isodecyl phthalate (DIDP), di-butyl phthalate (DBP), etc.

However, phthalate plasticizers are known as a type of environmental hormone that causes endocrine disruption, and regulations on use thereof have been recently strengthened. Accordingly, terephthalate-based plasticizers, epoxide-based plasticizers, plant oil-based plasticizers, cyclohexane-based plasticizers, and mixtures thereof which may replace the phthalate plasticizers are being studied as substitutes.

As a representative example of the non-phthalate-based plasticizers, di(2-ethylhexyl)cyclohexane-1,4-dicarboxylate (DEHCH) may be mentioned. Since DEHCH has low viscosity at room temperature and low temperatures, it is possible to achieve excellent coating properties. Since DEHCH has a fast gelling rate and good foaming properties, it receives attention as a plasticizer for vinyl chloride-based resins, etc. However, DEHCH has a disadvantage of plasticizer migration, which is a phenomenon in which the plasticizer gradually leaks out from vinyl chloride-based resin over time.

In order to supplement the above problem, Korean Patent No. 10-1889540 suggested a plasticizer composition including tributyl citrate along with di(2-ethylhexyl)cyclohexane-1,4-dicarboxylate. However, although such a plasticizer composition is excellent in terms of performance, it has a disadvantage of poor volatility resistance, and therefore, needs improvement.

In addition, efforts have recently been made to reduce carbon emissions in industrial processes to protect the environment. Accordingly, there is a demand for developing a non-phthalate-based plasticizer composition exhibiting improved volatility resistance and migration resistance, being excellent in overall physical properties such as gelling rate and plasticization efficiency, etc., and capable of reducing carbon emissions in the production process.

[Prior Art Documents]

Korean Patent No. 10-1889540

[Disclosure]

[Technical Problem]

There are provided a plasticizer composition that is not harmful to the human body because it does not include phthalate-based compounds, exhibits excellent volatility resistance, migration resistance, and weather resistance, and is able to reduce carbon emissions during a production process, and a vinyl chloride-based resin composition including the same.

[Technical Solution]

To achieve the above object, there is provided a plasticizer composition including:

a first plasticizer represented by the following Formula 1;
a second plasticizer represented by the following Formula 2; and
a third plasticizer represented by the following Formula 3, which is obtained from a recycled phthalate-based compound,
wherein a weight ratio of the first plasticizer and the second plasticizer is more than 1:0.2 to less than 1:5:

[Formula 1]

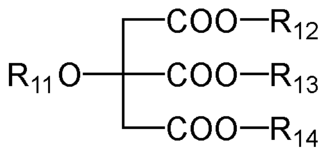

in Formula 1,

$R_{11}$ is hydrogen or acetyl,
$R_{12}$ to $R_{14}$ are each independently $C_{6-10}$ alkyl,

[Formula 2]

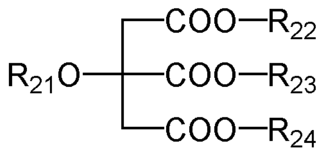

in Formula 2,

$R_{21}$ is hydrogen or acetyl,
$R_{22}$ to $R_{24}$ are each independently $C_{1-4}$ alkyl,

[Formula 3]

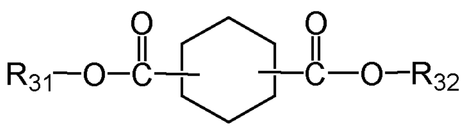

in Formula 3,
$R_{31}$ and $R_{32}$ are each independently $C_{4-12}$ alkyl.

There is also provided a vinyl chloride-based resin composition including the plasticizer composition; and a vinyl chloride-based resin.

[Effect of the Invention]

A plasticizer composition according to the present invention is not harmful to the human body as it does not include phthalate, and is environmentally friendly as it may reduce carbon emissions during a production process by including recycled raw materials. In addition, the plasticizer composition of the present invention is excellent in both migration resistance and volatility resistance, and excellent in physical properties such as weather resistance to ultraviolet rays, a gelling rate, and plasticization efficiency, etc., thereby being used as a general-purpose plasticizer.

[Best Mode for Carrying Out the Invention]

The terms used in this description are just for explaining exemplary embodiments and it is not intended to restrict the present invention. The singular expression may include the plural expression unless it is differently expressed contextually. It must be understood that the term "include", "equip", or "have" in the present description is only used for designating the existence of characteristics taken effect, steps, components, or combinations thereof, and do not exclude the existence or the possibility of addition of one or more different characteristics, steps, components or combinations thereof beforehand.

The present invention may be variously modified and have various forms, and specific exemplary embodiments

will be illustrated and described in detail as follows. It should be understood, however, that the description is not intended to limit the present invention to the particular forms disclosed, but on the contrary, the intention is to cover all modifications, equivalents, and alternatives falling within the spirit and scope of the invention.

Hereinafter, the present invention will be described in detail.

## Plasticizer composition

A plasticizer composition of the present invention includes a first plasticizer represented by Formula 1; a second plasticizer represented by Formula 2; and a third plasticizer represented by Formula 3, which is obtained from a recycled phthalate-based compound, wherein a weight ratio of the first plasticizer and the second plasticizer satisfies more than 1:0.2 to less than 1:5.

The present inventors conducted research on a non-phthalate-based plasticizer composition that is excellent in both plasticizer migration resistance and volatility resistance and has excellent physical properties such as gelling rate, plasticization efficiency, and weather resistance to ultraviolet rays, etc. As a result, they found that the plasticizer composition of the present invention including the first plasticizer represented by Formula 1 and the second plasticizer represented by Formula 2 at a predetermined ratio, along with the recycled phthalate-based compound as the third plasticizer satisfies all of the above physical properties, thereby completing the present invention.

The plasticizer composition not only exhibits excellent physical properties as described above, but also has excellent environmental effects as it may significantly reduce carbon emissions during the preparation of the plasticizer composition by including recycled raw materials.

The first plasticizer and the second plasticizer are citrate-based plasticizers which are ester compounds of citric acid and alcohol.

The first plasticizer, which is a citrate-based compound having a relatively high molecular weight, may be prepared by citric acid and alcohol having 6 to 10 carbon atoms. Specific examples of the first plasticizer may include one or more selected from the group consisting of triethylhexyl citrate, trihexyl citrate, triheptyl citrate, trinonyl citrate, and tridecyl citrate.

In one embodiment of the present invention, the first plasticizer may be triethylhexyl citrate (or tris(2-ethylhexyl) 2-hydroxypropane-1,2,3-tricarboxylate). The triethylhexyl citrate, which is a compound represented by the following Formula 1-1, is also called trioctyl citrate.

[Formula 1-1]

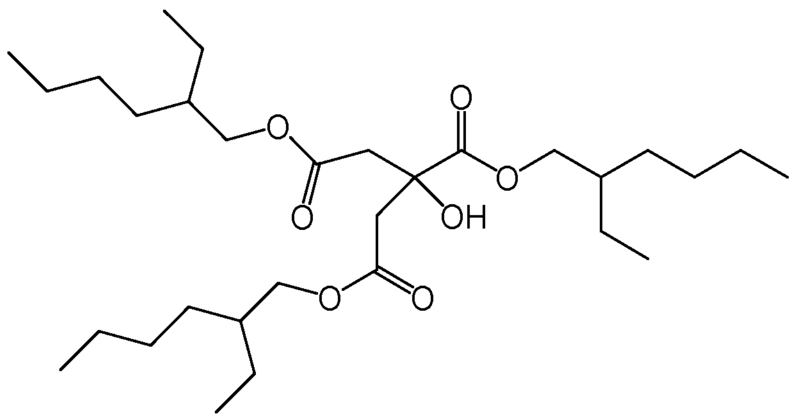

The second plasticizer, which is a citrate-based compound having a lower molecular weight than the first plasticizer, may be prepared by citric acid and alcohol having 1 to 4 carbon atoms. Specific examples of the second plasticizer may include one or more selected from the group consisting of trimethyl citrate, triethylcitrate, tripropyl citrate, and tributyl citrate.

In one embodiment of the present invention, the second plasticizer may tributyl citrate (or tributyl 2-hydroxypropane-1,2,3-tricarboxylate) represented by the following Formula 2-1.

[Formula 2-1]

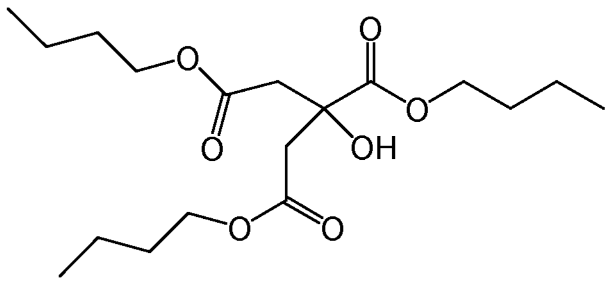

The first plasticizer has excellent volatility resistance, but has a disadvantage of being inferior in terms of plasticizer migration resistance. On the contrary, the second plasticizer having a relatively low molecular weight has excellent migration resistance, but have a problem of high volatilization during high-temperature processing.

Accordingly, in the present invention, provided is a plasticizer composition which is excellent in both migration resistance and volatility resistance by including the first plasticizer and the second plasticizer at the same time.

To secure such excellent migration resistance and volatility resistance properties, the first plasticizer and the second plasticizer are included in the composition at a weight ratio of more than 1:0.2 to less than 1:5, more preferably, 1:0.3 or more, or 1:0.4 or more, or 1:0.5 or more, or 1:0.6 or more, and 1:4 or less, or 1:3 or less, or 1:2 or less.

When the weight ratio is 1:0.2 or less, the content of the second plasticizer becomes too small and the plasticizer migration increases, and when it is 1:5 or more, the content of the first plasticizer is not enough and the volatile loss of the plasticizer increases, and thus excellent migration resistance and volatility resistance may not be satisfied simultaneously.

In one embodiment of the present invention, the first plasticizer may be triethylhexyl citrate, and the second plasticizer may be tributyl citrate.

The plasticizer composition of the present invention includes the recycled cyclohexane dicarboxylate-based compound represented by Formula 3 as the third plasticizer along with the first plasticizer and the second plasticizer

Formula 3 may be represented by any one of the following Formulae 3-1 to 3-3 according to the substitution position of the ester group.

[Formula 3-1]

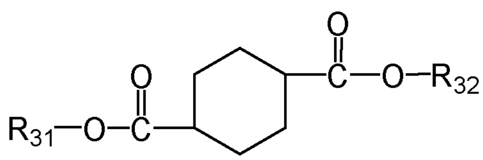

[Formula 3-2]

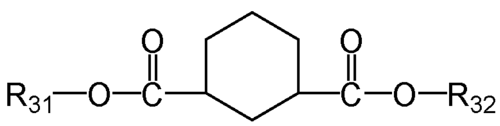

[Formula 3-3]

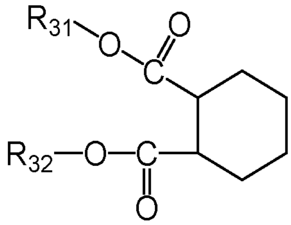

Formula 3-1 is a cyclohexane-1,4-dicarboxylate-based compound, Formula 3-2 is a cyclohexane-1,3-dicarboxylate-based compound, and Formula 3-3 is a cyclohexane-1,2-dicarboxylate-based compound.

In Formulae 3-1 to 3-3, $R_{31}$ and $R_{32}$ are each independently $C_{4-12}$ alkyl. Preferably, $R_{31}$ and $R_{32}$ are each independently a butyl group, an isobutyl group, a pentyl group, a hexyl group, a heptyl group, an octyl group, a 2-ethylhexyl group, a nonyl group, an isononyl group, a 2-propylheptyl group, a decyl group, or an isodecyl group.

For example, when $R_{31}$ and $R_{32}$ are the same as each other in the cyclohexane-1,4-dicarboxylate-based compound, they may be di(butyl)cyclohexane-1,4-dicarboxylate, di(isononyl)cyclohexane-1,4-dicarboxylate, etc.; when $R_{31}$ and $R_{32}$ are different from each other, they may be butyl(2-ethylhexyl)cyclohexane-1,4-dicarboxylate, butyl(isononyl)cyclohexane-1,4-dicarboxylate, etc.

According to one embodiment of the present invention, the cyclohexane dicarboxylate-based compound may be one or more selected from the group consisting of di(2-ethylhexyl)cyclohexane-1,4-dicarboxylate, diisononylcyclohexane-1,2-dicarboxylate, di(2-ethylhexyl)cyclohexane-1,2-dicarboxylate, butyl(2-ethylhexyl)cyclohexane-1,4-dicarboxylate, and dibutylcyclohexane-1,4-dicarboxylate.

According to one embodiment of the present invention, the cyclohexane dicarboxylate-based compound may be di(2-ethylhexyl)cyclohexane-1,4-dicarboxylate (DEHCH) having a structure of the following Formula 3-4.

[Formula 3-4]

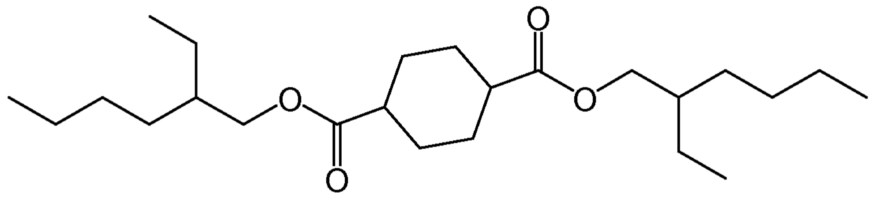

The DEHCH is transparent in color and has no odor, has low viscosity at room temperature and low temperatures to realize excellent work performance, has a fast gelling rate, and is excellent in overall physical properties such as processability, plasticization efficiency, plasticizer migration resistance, etc., as compared to other cyclohexane dicarboxylate-based compounds. Specifically, DEHCH has superior processability and plasticization efficiency to diisononylcyclohexane-1,2-dicarboxylate, and superior plasticization efficiency and migration resistance to di(2-ethylhexyl)cyclohexane-1,2-dicarboxylate. Accordingly, when DEHCH is used, physical properties of the plasticizer composition and processability may be further improved.

The cyclohexane dicarboxylate-based compound used as the third plasticizer in the present invention is a recycled cyclohexane dicarboxylate-based compound obtained from recycled raw materials. The recycled raw materials refer to raw materials obtained from wastes, such as synthetic resin wastes and by-products generated during the production process of synthetic resins, etc.

Specifically, the cyclohexane dicarboxylate-based compound may be obtained from recycled phthalate-based compounds. For example, the recycled DEHCH (R-DEHCH) may be obtained through a hydrogen addition reaction of the recycled dioctylterephthalate (R-DOTP). In this case, the energy consumption consumed in producing pure phthalate-based compounds and greenhouse gas emissions are reduced, and therefore, when the recycled cyclohexane dicarboxylate-based compound is used, carbon emission of the plasticizer composition may be significantly reduced.

Like pure cyclohexane dicarboxylate-based compounds produced from pure raw materials, the recycled cyclohexane dicarboxylate-based compound exhibits the characteristics of a fast gelling rate and high plasticization efficiency, but has disadvantages of being relatively yellow in color due to impurities and having a higher acid value. However, its volatility resistance and weather resistance to ultraviolet rays are superior to pure cyclohexane dicarboxylate-based compounds.

However, when the acid value of the recycled cyclohexane dicarboxylate-based compound is too high, it may affect the color or smell of the plasticizer composition and the plasticizer migration resistance is likely to be inferior. Therefore, the acid value of the recycled cyclohexane dicarboxylate-based compound is preferably 0.2 KOH mg/g or less, 0.15 KOH mg/g or less, or 0.10 KOH mg/g or less. As the acid value is lower, it is better. In theory, the acid value may be 0 KOH mg/g, for example, 0.05 KOH mg/g or more, or 0.1 KOH mg/g or more.

In this regard, the acid value is a weight (mg) of potassium hydroxide (KOH) required to neutralize an acid contained in 1 g of a sample, and may be obtained by titrating the sample solution with 0.1 N of an alcoholic KOH solution.

The recycled phthalate-based compound may be a commercially available product or may be obtained from waste products using known methods. For example, the recycled phthalate-based compound may be obtained by depolymerizing waste polyester to obtain an aromatic dicarboxylic acid or ester thereof and reacting the same with an appropriate alcohol. Alternatively, phthalic acid is extracted from waste materials such as wastewater discharged during alkali reduction processing of polyester fibers, wastewater generated during a process of producing pure terephthalate-based compounds, and residues after filtration, etc., and then reacted with alcohol to obtain the recycled phthalate-based compound.

The physical properties of the recycled phthalate-based compound used in the present invention are not particularly limited, but it may be more desirable to use a recycled phthalate-based compound with a low acid value in order to obtain a higher quality plasticizer.

Specifically, the acid value of the recycled phthalate-based compound to improve quality of the plasticizer may be preferably 0.2 KOH mg/g or less, 0.15 KOH mg/g or less, or 0.10 KOH mg/g or less. As the acid value is lower, the quality is better, and accordingly, there is no limitation in the lower limit. In theory, the lower limit may be 0 KOH mg/g. In particular, when the acid value of the recycled phthalate-based compound which is the raw material of the cyclohexane dicarboxylate-based compound represented by Formula 1 is high, the color of the composition may change from colorless, transparent to yellow or brown, or the odor may be severe. Further, the acid value of the raw material is high, there is a possibility that the migration resistance of finished products in which the plasticizer is used may be inferior. Thus, it is preferable that the cyclohexane dicarboxylate-based compound may be obtained from the recycled phthalate-based compound having the above range of acid value.

According to one embodiment of the present invention, in the plasticizer composition, the recycled phthalate-based compound which is the raw material of the cyclohexane dicarboxylate-based compound may be one or more selected from the group consisting of recycled dibutyl phthalate, recycled dihexyl phthalate, recycled dioctyl phthalate, recycled din-octyl phthalate, recycled diisononyl phthalate, recycled diisodecyl phthalate, recycled dibutyl isophthalate, recycled dioctyl isophthalate, recycled diisononyl isophthalate, recycled diisodecyl isophthalate, recycled dibutyl terephthalate, recycled dioctyl terephthalate, recycled diisononyl terephthalate, and recycled diisodecyl terephthalate.

In one embodiment of the present invention, the total content of the first plasticizer and the second plasticizer may be 20 parts by weight or more, or 30 parts by weight or more, and 60 parts by weight or less, or 50 parts by weight or less, based on 100 parts by weight of the plasticizer composition. When the total content of the first plasticizer and the second plasticizer is less than 20 parts by weight, based on 100 parts by weight of the plasticizer composition, plasticizer migration resistance and weather resistance become insufficient. When the total content is more than 60 parts by weight, the content of the recycled cyclohexane dicarboxylate-based compound is relatively reduced, the gelling rate may decrease or plasticization efficiency may decrease.

The content of each of the first plasticizer and the second plasticizer in the plasticizer composition may be appropriately adjusted as long as it satisfies the range of weight ratio and the range of total content described above. However, in order to secure the migration resistance and volatility resistance effects described above, each plasticizer is preferably included in an amount of 7 parts by weight or more, or 10 parts by weight or more, based on 100 parts by weight of the plasticizer composition.

For example, the first plasticizer may be included in an amount of 7 parts by weight or more, or 10 parts by weight or more, and 30 parts by weight or less, or 25 parts by weight or less, and the second plasticizer may be included in an amount of 10 parts by weight or more, or 12 parts by weight or more, and 35 parts by weight or less, or 30 parts by weight or less, based on 100 parts by weight of the plasticizer composition, but are not limited thereto.

Further, the third plasticizer may be included in an amount of 40 parts by weight or more, or 50 parts by weight or more, and 80 parts by weight or less, or 70 parts by weight, based on 100 parts by weight of the plasticizer composition.

The plasticizer composition according to one embodiment of the present invention may consist of only the first plasticizer, second plasticizer, and third plasticizer. Based on 100 parts by weight of the plasticizer composition, the first plasticizer and the second plasticizer may be included in the total amount of 20 parts by weight to 60 parts by weight, and the third plasticizer may be included in an amount of 40 parts by weight to 80 parts by weight. Alternatively, based on 100 parts by weight of the plasticizer composition, the first plasticizer and the second plasticizer may be included in the total amount of 30 parts by weight to 50 parts by weight, and the third plasticizer may be included in an amount of 50 parts by weight to 70 parts by weight. In this regard, the first plasticizer is triethylhexyl citrate, the second plasticizer is tributyl citrate, and the third plasticizer may be recycled di(2-ethylhexyl)cyclohexane-1,4-dicarboxylate.

The plasticizer composition according to one embodiment of the present invention may include 10 parts by weight to 25 parts by weight of triethylhexyl citrate, 12 parts by weight to 35 parts by weight of tributyl citrate, and 50 parts by weight to 70 parts by weight of recycled di(2-ethylhexyl)cyclohexane-1,4-dicarboxylate, based on 100 parts by weight thereof.

The above-described plasticizer composition of the present invention includes the three types of plasticizers, wherein the first plasticizer and the second plasticizer are included at a predetermined weight ratio, thereby satisfying the excellent migration resistance while have excellent volatility resistance, and excellent overall physical properties of weather resistance to UV, gelling rate, plasticization efficiency, etc.

The plasticizer composition of the present invention may be used in resin compositions such as polyvinyl chloride, polystyrene, polyurethane, polyethylene, polypropylene, silicone, modified silicone, ethylene vinyl acetate resins, and thermoplastic elastomers, etc., and exhibits low heating loss and low plasticizer migration, thereby being particularly suitable for use in vinyl chloride-based resin compositions that require heat resistance.

The plasticizer composition of the present invention has a volatile loss of 2.6% by weight or less, or 2.5% by weight or less, or 2.4% by weight or less, as measured after being left at 200°C for 1 hour, indicating excellent volatility resistance. Therefore, the plasticizer composition of the present invention has a small amount of loss even during high-temperature processing, and accordingly, there is no concern about deterioration in processability, and the amount of fume generated during the processing is reduced, thereby improving process stability. The method of measuring the volatile loss may be specified in Example described later.

Further, the plasticizer composition may reduce carbon emissions by obtaining the cyclohexane dicarboxylate-based compound from recycled raw materials. For example, the plasticizer composition of the present invention may have a carbon emission reduction rate of 3% or more, or 3% or more to 30% or less. The carbon emission reduction rate of the plasticizer composition refers to a ratio of reduced carbon emissions in the production of the plasticizer composition including the cyclohexane dicarboxylate-based compound obtained from the recycled phthalate-based compound, relative to the production of a plasticizer composition including a cyclohexane dicarboxylate-based compound obtained from a pure phthalate-based compound.

Specifically, the carbon emission reduction rate (%) of the plasticizer composition may be calculated by the following Equation 1.

[Equation 1]

$$\text{Carbon emission reduction rate(\%)} = 100 - [(A1/A2)*100]$$

in Equation 1,

A1 represents carbon emissions ($tCO_2$ eq/MT) of the plasticizer composition including the recycled cyclohexane dicarboxylate-based compound, and

A2 represents carbon emissions ($tCO_2$ eq/MT) of a control plasticizer composition.

Specifically, A1 corresponds to total carbon emissions ($tCO_2$ eq/MT) according to the composition ratio of each component included in the plasticizer composition according to the present invention. A2 corresponds to total carbon emissions ($tCO_2$ eq/MT) according to the composition ratio of each component of a plasticizer composition using the same composition as the plasticizer composition measured in A1, but using pure cyclohexane dicarboxylate-based compound instead of the recycled cyclohexane dicarboxylate-based compound obtained from the recycled phthalate-based compound. Here, the unit of the carbon emissions is a weight equivalent (eq) of total $CO_2$ emissions per metric ton.

For example, the carbon emissions (A1) of the plasticizer composition including triethylhexyl citrate (TOC), tributyl citrate (TBC), and recycled di(2-ethylhexyl)cyclohexane-1,4-dicarboxylate (R-DEHCH) in an amount of 10 parts by weight, 20 parts by weight, and 70 parts by weight, respectively is 0.567 $tCO_2$ eq/MT, calculated as the sum of carbon emissions of each component according to this composition ratio, i.e., carbon emissions of TOC * 0.1 + carbon emissions of TBC * 0.2 + carbon emissions of R-DEHCH * 0.7.

The control plasticizer composition with respect to the above plasticizer composition is a plasticizer composition including TOC, TBC, and DEHCH of 10 parts by weight, 20 parts by weight, and 70 parts by weight, respectively. The carbon emissions (A2) thereof is 0.627 $tCO_2$ eq/MT, calculated as carbon emissions of TOC * 0.1 + carbon emissions of TBC * 0.2 + carbon emissions of DEHCH * 0.7. Therefore, according to Equation 1, the carbon emission reduction rate of the plasticizer composition including TOC, TBC, and R-DEHCH of 10 parts by weight, 20 parts by weight, and 70 parts by weight, respectively is 10%.

In this regard, the carbon emissions of each component used in the plasticizer composition are as follows:

- Recycled di(2-ethylhexyl)cyclohexane-1,4-dicarboxylate (R-DEHCH): 0.565 $tCO_2$ eq/MT
- Pure di(2-ethylhexyl)cyclohexane-1,4-dicarboxylate (DEHCH, or Pure-DEHCH): 0.651 $tCO_2$ eq/MT
- Tributyl citrate (TBC): 0.571 $tCO_2$ eq/MT
- Triethylhexyl citrate (TOC): 0.571 $tCO_2$ eq/MT

The carbon emissions of each component used in the plasticizer composition may refer to the value provided by the manufacturer or may be calculated based on the manufacturing process and chemical reaction of each component. A detailed method of calculating the carbon emission reduction rate may be specified in Experimental Example to be described later.

Preferably, the carbon emission reduction rate of the plasticizer composition may be 5% or more, or 7% or more, and 20% or less, or 15% or less.

**Vinyl chloride-based resin composition**

According to another embodiment of the present invention, provided is a vinyl chloride-based resin composition including the plasticizer composition and a vinyl chloride-based resin.

More specifically, the vinyl chloride-based resin composition may include the plasticizer composition in an amount of 10 parts by weight or more, or 30 parts by weight or more, or 40 parts by weight or more, and 200 parts by weight or less, or 100 parts by weight or less, or 70 parts by weight or less, based on 100 parts by weight of the vinyl chloride-based resin.

The vinyl chloride-based resin composition may further improve the plasticizer migration and heating loss characteristics by including the plasticizer composition according to the present invention. As the vinyl chloride-based resin, polyvinyl chloride (PVC) with a degree of polymerization of 800 to 1,700 may be used, but is not limited thereto.

Throughout this specification, the vinyl chloride-based resin refers to a polymer of a vinyl chloride-based monomer alone or a copolymer in which a vinyl chloride-based monomer and a comonomer copolymerizable therewith are copolymerized. In addition, the vinyl chloride-based resin may be prepared by mixing with a suspension agent, a buffering agent, and a polymerization initiator, etc., and using a polymerization method such as suspension polymerization, micro-suspension polymerization, emulsion polymerization, or mini-emulsion polymerization, etc.

Another monomer copolymerizable with the above-described vinyl chloride monomer may be, for example, vinyl ester-based monomers including ethylene vinyl acetate monomer, vinyl propionate monomer, etc.; olefin-based monomers including ethylene, propylene, isobutyl vinyl ether, and halogenated olefin; methacrylic acid ester-based monomers including alkyl esters of methacrylic acid; maleic anhydride monomer; acrylonitrile monomer; styrene monomer; and halogenated polyvinylidene, etc., and one or more thereof is mixed with a vinyl chloride monomer to prepare a copolymer thereof. However, the present invention is not limited to the above-described monomers, and depending on the physical properties or uses of the vinyl chloride-based resin composition, which are required during production, monomers generally used to form copolymers through polymerization with vinyl chloride monomers in the technical field to which the present invention belongs may be used without particular limitation.

The vinyl chloride-based resin composition may further include additives, for example, any one or more selected from the group consisting of stabilizers, fillers, and pigments. The additives may be appropriately selected depending on physical properties to be improved in the vinyl chloride-based resin composition.

The stabilizer is added for the purpose of preventing changes in the physical properties, which are caused by breaking and crosslinking of the main chain by a polyene structure, which is a chromophore, formed by HCl separated from the vinyl chloride-based resin.

More specific examples of the stabilizers which may be used in the present invention include Ca-Zn-based compounds; K-Zn-based compounds; Ba-Zn-based compounds; organic Tin-based compounds such as mercaptide-based compounds, maleic acid-based compounds or carboxylic acid-based compounds; metallic soap-based compounds such as Mg-stearate, Ca-stearate, Pb-stearate, Cd-stearate, or Ba-stearate, etc.; phenol-based compounds; phosphate ester-based compounds; or phosphite ester-based compounds, etc., which may be selectively included according to the purpose of use.

In one embodiment of the present invention, as the stabilizer, Ca-Zn-based compounds may be used. Ca-Zn-based compounds are known to have poor performance such as in thermal stability and haze, etc., as compared to the most widely used Ba-Zn-based compounds. However, even though Ca-Zn-based compound is used, the vinyl chloride-based resin composition of the present invention may achieve the same level of physical properties as using the existing Ba-Zn-based compound. Further, since Ca-Zn-based compounds include no heavy metals, they may meet the market's demand for reducing the use of heavy metals.

The stabilizer may be included in an amount of preferably 0.5 parts by weight to 7 parts by weight, and more preferably 1 part by weight to 4 parts by weight, based on 100 parts by weight of the vinyl chloride-based resin. When the content of the stabilizer is less than 0.5 parts by weight, there is a problem of poor thermal stability, and when it

exceeds 7 parts by weight, there is a problem of poor processability.

The filler of the present invention is used for the purpose of improving productivity and dry touch feeling of the vinyl chloride-based resin composition, and includes any one or more selected from the group consisting of calcium carbonate, talc, titanium dioxide, kaolin, silica, alumina, magnesium hydroxide, and clay.

The filler may be included in an amount of preferably 10 parts by weight to 150 parts by weight, and more preferably 50 parts by weight to 130 parts by weight in the vinyl chloride-based resin according to the present invention. When the content of the filler is less than 50 parts by weight, there is a problem of poor dimensional stability and economic feasibility, and when it exceeds 130 parts by weight, there is a problem of poor foaming surface and reduced processability.

The pigment may be titanium dioxide, carbon black, cadmium-based pigment, etc. The pigment may be included in an amount of 0.1 part by weight to 10 parts by weight, or 1 part by weight to 7 parts by weight, based on 100 parts by weight of the vinyl chloride-based resin. When the content of the pigment is less than 0.1 part by weight, it is difficult to implement color, and when it exceeds 10 parts by weight, mechanical properties and foaming surface may deteriorate.

The vinyl chloride-based resin composition according to the present invention may be prepared by a method generally known in the art using the vinyl chloride-based resin, the plasticizer composition, and optionally, additives. However, there is no particular limitation on the method.

The vinyl chloride-based resin composition may improve processability by exhibiting a fast gelling rate, and exhibits low heating loss, and has excellent migration resistance.

Specifically, the vinyl chloride-based resin composition according to the present invention has a plasticizer migration amount of 0.5% by weight or less, or 0.4% by weight or less, or 0.3% by weight or less, and thus the leakage of plasticizer is remarkably reduced, thereby maintaining excellent plasticizing effect and causing no environmental problems. A method of measuring the plasticizer migration amount may be specified in Example described later.

Further, the vinyl chloride-based resin composition may have a carbon emission reduction rate of 3% or more, 5% or more, or 5.5% or more, and 30% or less, 20% or less, or 10% or less. The carbon emission reduction rate of the vinyl chloride-based resin composition is a value calculated in comparison with a vinyl chloride-based resin composition including the pure cyclohexane dicarboxylate-based compound instead of the recycled cyclohexane dicarboxylate-based compound.

Specifically, the carbon emission reduction rate of the vinyl chloride-based resin composition may be calculated by the following Equation 2.

[Equation 2]

$$\text{Carbon emission reduction rate(\%)} = 100-[(A3/A4)*100]$$

in Equation 2,

A3 represents carbon emissions ($tCO_2$ eq/MT) of the vinyl chloride-based resin composition of the present invention, and

A4 represents carbon emissions ($tCO_2$ eq/MT) of the control vinyl chloride-based resin composition.

Specifically, A3 corresponds to total carbon emissions ($tCO_2$ eq/MT) according to the composition ratio of each component included in the vinyl chloride-based resin composition of the present invention. A4 corresponds to total carbon emissions ($tCO_2$ eq/MT) according to the composition ratio of each component of the control vinyl chloride-based resin composition using the same composition as the vinyl chloride-based resin composition measured in A3, but including the pure cyclohexane dicarboxylate-based compound instead of the recycled cyclohexane dicarboxylate-based compound. Here, the unit of the carbon emissions is a weight equivalent (eq) of total $CO_2$ emissions per metric ton.

In this regard, the carbon emissions of components with relatively insignificant contents, e.g., thermal stabilizers, in the vinyl chloride-based resin composition, are not considered, and the carbon emissions of only the main components, the vinyl chloride-based resin and plasticizer composition, are calculated to determine the carbon emission reduction rate of the vinyl chloride-based resin composition. In addition, the carbon emissions of the vinyl chloride-based resin and other components included in the vinyl chloride-based resin composition may be calculated by referring to the value provided by the manufacturer or based on the manufacturing process and chemical reaction.

The vinyl chloride-based resin composition of the present invention may be appropriately used in the fields that require heat resistance properties, due to the excellent properties described above. Specifically, the vinyl chloride-based resin composition may be used in electrical wire covering materials, automobile interior materials, foam sheets, deco sheets, flooring materials, wallpaper, mats, tarpaulins, sealants, artificial leather, toys, automobile lower coating materials, etc., and particularly, in electrical wire covering materials, automobile interior materials, etc.

Meanwhile, according to still another aspect, provided is a molded article including the vinyl chloride-based

resin composition. The molded article may be manufactured by further adding additives such as stabilizers, fillers, and/or foaming agents to the vinyl chloride-based resin composition depending on its purpose.

The molded article may be used in electrical wire covering materials, automobile interior materials, automobile foam sheets, deco sheets, flooring materials, wallpaper, mats, tarpaulins, sealants, artificial leather, toys, automobile lower coating materials, etc., and particularly, suitable for use in electrical wire covering materials of automobiles, automobile interior materials, etc., which require heat resistance, due to excellent heating loss characteristics.

Hereinafter, preferred exemplary embodiments will be provided for better understanding of the present invention. However, the following exemplary embodiments are provided only for illustrating the present invention, but the scope of the present invention is not limited to the following exemplary embodiments.

**<Example>**

**Example 1**

**(1) Preparation of plasticizer composition**

Recycled di(2-ethylhexyl)cyclohexane-1,4-dicarboxylate (R-DEHCH) was prepared by hydrogenation of recycled dioctylterephthalate (R-DOTP, Runzenenguyuan, 0.15 KOH mg/g).

70 parts by weight of the prepared R-DEHCH (0.15 KOH mg/g), 12 parts by weight of tributyl citrate (TBC), and 18 parts by weight of triethylhexyl citrate (TOC) were mixed to prepare a plasticizer composition.

**(2) Preparation of vinyl chloride resin composition**

100 parts by weight of a vinyl chloride resin (Hanwha solution P-1000, degree of polymerization of 1000±50, bulk density of 0.55±0.04 g/cm$^3$), 40 parts by weight of the plasticizer composition prepared in (1), and 2 parts by weight of Ca/Zn-based thermal stabilizer (Songwon Industry CZ-200) were mixed in a Hobart mixer for 10 minutes to prepare a vinyl chloride resin (PVC) composition.

**Examples 2 to 5**

A plasticizer composition and a vinyl chloride resin composition including the same were prepared in the same manner as in Example 1, except that the contents of R-DEHCH, TBC, and TOC were as in Table 1 below during preparation of the plasticizer composition.

**Comparative Example 1**

100 parts by weight of a vinyl chloride resin (Hanwha solution P-1000), 40 parts by weight of R-DEHCH as a plasticizer, and 2 parts by weight of Ca/Zn-based thermal stabilizer (Songwon Industry CZ-200) were mixed in a Hobart mixer for 10 minutes to prepare a vinyl chloride resin composition.

**Comparative Example 2**

A vinyl chloride resin composition was prepared in the same manner as in Comparative Example 1, except that TBC was used as the plasticizer.

**Comparative Example 3**

A vinyl chloride resin composition was prepared in the same manner as in Comparative Example 1, except that TOC was used as the plasticizer.

**Comparative Examples 4 to 7**

A plasticizer composition and a vinyl chloride resin composition including the same were prepared in the same manner as in Example 1, except that the contents of R-DEHCH, TBC, and TOC were as in Table 1 below during preparation of the plasticizer composition.

## Experimental Example

Physical properties of the plasticizer compositions and the vinyl chloride resin compositions of Examples and Comparative Examples were evaluated by the following methods, and the results are shown in Tables 1 and 2.

### (1) Volatile loss (%) of plasticizer composition

20 g of the plasticizer composition was placed in a glass dish, and the amount of the plasticizer composition volatilized at 200°C for 1 hour was measured. Volatile loss was calculated by (weight of plasticizer after test)/(weight of plasticizer before test)* 100.

### (2) Gelling time

54 g of the vinyl chloride resin composition was placed in a Brabender mixer at 95 °C, and mixed at 30 rpm for 10 minutes. The gelling time of the resin was analyzed through torque changes for the processing time in the mixer.

### (3) Plasticizer migration

Roll mill processing (170°C, 3 minutes) and press processing (180°C, 8 minutes) were sequentially performed on the vinyl chloride resin composition to fabricate a 2 mm-thick flat plate. The flat plate thus fabricated was cut into a circular specimen having a diameter of about 4 cm. Oil absorbing sheets made of polypropylene were placed on the upper and lower parts of the specimen, and left at 60°C for 7 days under a load of 5 kg to accelerate plasticizer migration. After completing the plasticizer migration test, the weight change rates of the specimen and oil sheets were measured.

The weight change rate of the specimen was calculated by [(weight change of specimen/weight of specimen before test) *100], and the weight change rate of oil sheets was calculated by [(weight change of oil sheets/weight of oil sheets before test) * 100]. The weight loss of the specimen was equal to the weight increase of the oil sheets, and therefore, in this experiment, the plasticizer migration was evaluated only with the weight change rate of the specimen.

### (4) Thermal stability

A 2mm-thick sheet fabricated by roll mill processing (170°C, 3 minutes) and press processing (180°C, 10 minutes) of the vinyl chloride resin composition was cut into a 15 mm × 480 mm strap shape and mounted in an oven at 190°C. The specimen mounted in the oven was set to be discharged out of the oven at a speed of 15 mm/5 minutes. The time for color change was calculated by observing discoloration or carbonization of the discharged. The heat resistance time (minutes) was calculated through the length (non-carbonized length, mm) from the end of the test to the start of discoloration.

### (5) Hardness (plasticization efficiency)

Roll mill processing (170°C, 3 minutes) and press processing (180°C, 8 minutes) were sequentially performed on the vinyl chloride resin composition to fabricate a 6 mm flat plate. In accordance with the ASTM D2240 method, a needle of a hardness tester (A Type) was completely lowered into one part of the specimen and the hardness value was read after 5 seconds. After testing three parts for each specimen, the average value thereof was taken. The hardness was used as an indicator of the plasticization efficiency.

### (6) Transmittance and Haze

Roll mill processing (170°C, 3 minutes) and press processing (180°C, 8 minutes) were sequentially performed on the vinyl chloride resin composition to fabricate a 5 mm flat plate. In accordance with the ASTM D1003 standard, transmittance and Haze of the specimen thus fabricated were measured using BYK-Gardner Instrument.

### (7) Color evaluation (Yellow index)

Roll mill processing (170°C, 3 minutes) and press processing (180°C, 8 minutes) were sequentially performed on the vinyl chloride resin composition to fabricate a 6 mm-thick flat plate. In accordance with the ASTM E313 standard, yellow index (YI, yellowness) of the specimen thus fabricated was measured.

**(8) Tensile strength and elongation**

A molding sheet of the vinyl chloride resin composition was fabricated into a specimen of a Type I dumbbell shape in accordance with ASTM D 638, and then, tensile strength and elongation were measured in a universal test machine (UTM) at a rate of 500 mm/min.

**(9) UV weather resistance**

Roll mill processing (170°C, 3 minutes) and press processing (180°C, 8 minutes) were sequentially performed on the vinyl chloride resin composition to fabricate a 5 mm-thick flat plate. In accordance with the ASTM G154 CYCLE 2 method, a UV ray weather resistance test (exposure time of 300 hours) was performed on the specimen thus fabricated.

**(10) Carbon emission reduction rate (%)**

Carbon emission reduction rates (%) of the plasticizer compositions of Examples and Comparative Examples were calculated according to the following Equation 1.

[Equation 1]

$$\text{Carbon emission reduction rate}(\%) = 100-[(A1/A2)*100]$$

in Equation 1,

A1 represents carbon emissions ($tCO_2$ eq/MT) of the plasticizer composition of each Example or Comparative Example, and
A2 represents carbon emissions ($tCO_2$ eq/MT) of a control plasticizer composition.

In detail, A1 corresponds to total carbon emissions ($tCO_2$ eq/MT) according to the composition ratio of each component included in the plasticizer composition of each Example or Comparative Example, and A2 corresponds to total carbon emissions ($tCO_2$ eq/MT) according to the composition ratio of each component of a control plasticizer composition using the same composition as the plasticizer composition measured in A1, but using pure cyclohexane dicarboxylate-based compound instead of the recycled cyclohexane dicarboxylate-based compound. Here, the unit of the carbon emissions is a weight equivalent (eq) of total $CO_2$ emissions per metric ton.

Further, carbon emission reduction rates (%) of the vinyl chloride resin compositions (PVC compositions) of Examples and Comparative Examples were calculated according to the following Equation 2.

[Equation 2]

$$\text{Carbon emission reduction rate}(\%) = 100-[(A3/A4)*100]$$

in Equation 2,

A3 represents carbon emissions ($tCO_2$ eq/MT) of the PVC resin composition of each Example or Comparative Example, and
A4 represents carbon emissions ($tCO_2$ eq/MT) of the control PVC resin composition.

In detail, A3 corresponds to total carbon emissions ($tCO_2$ eq/MT) according to the composition ratio of each component included in the PVC resin composition of each Example or Comparative Example. A4 corresponds to total carbon emissions ($tCO_2$ eq/MT) according to the composition ratio of each component of the control PVC resin composition using the same composition as the PVC resin composition measured in A3, but including the pure cyclohexane dicarboxylate-based compound instead of the recycled cyclohexane dicarboxylate-based compound. Here, the unit of the carbon emissions is a weight equivalent (eq) of total $CO_2$ emissions per metric ton.

When calculating the carbon emissions of the PVC resin composition, the thermal stabilizer with a relatively small content in the composition was excluded, and only the composition ratio of PVC and plasticizer composition (PVC fraction of 0.7, plasticizer composition fraction of 0.3) and carbon emissions were considered.

The carbon emissions of each component used in the plasticizer compositions and the PVC resin compositions

of Examples and Comparative Examples are as follows:

- Recycled di(2-ethylhexyl)cyclohexane-1,4-dicarboxylate (R-DEHCH): 0.565 $tCO_2$ eq/MT
- Pure di(2-ethylhexyl)cyclohexane-1,4-dicarboxylate (DEHCH, or Pure-DEHCH): 0.651 $tCO_2$ eq/MT
- Tributyl citrate (TBC): 0.571 $tCO_2$ eq/MT
- Triethylhexyl citrate (TOC): 0.571 $tCO_2$ eq/MT
- Polyvinyl chloride (PVC, Hanwha solution P-1000): 0.182 $tCO_2$ eq/MT

[Table 1]

| | | Example 1 | Example 2 | Example 3 | Example 4 | Example 5 |
|---|---|---|---|---|---|---|
| Plasticizer composition (parts by weight) | TOC | 18 | 10 | 15 | 25 | 20 |
| | TBC | 12 | 20 | 15 | 25 | 30 |
| | R-DEHCH | 70 | 70 | 70 | 50 | 50 |
| Volatile loss (%) | | 2.03 | 2.33 | 2.15 | 2.56 | 2.56 |
| Gelling time (sec) | | 293 | 270 | 285 | 290 | 285 |
| Thermal stability (min) | | 61 | 61 | 61 | 56 | 56 |
| Hardness (Share A) | | 85 | 85 | 85 | 86 | 86 |
| Transmittance (%) | | 88 | 88 | 88 | 88 | 88 |
| Haze (%) | | 5.1 | 5 | 5 | 5.5 | 5.5 |
| Plasticizer migration (%) | | 0.3 | 0.3 | 0.3 | 0.2 | 0.2 |
| Yellow Index (YI) | | 5.6 | 5.7 | 5.6 | 6.1 | 6.1 |
| Tensile strength ($kgf/cm^2$) | | 241 | 239 | 240 | 246 | 246 |
| Elongation (%) | | 279 | 275 | 278 | 281 | 281 |
| UV weather resistance | | 13 | 13 | 13 | 14 | 14 |
| Carbon emission ($tCO_2$ eq/MT) of plasticizer composition | | 0.567 | 0.567 | 0.567 | 0.568 | 0.568 |
| Carbon emission reduction rate (%) of plasticizer composition | | 10 | 10 | 10 | 7 | 7 |
| Carbon emission ($tCO_2$ eq/MT) of PVC composition | | 0.297 | 0.297 | 0.297 | 0.298 | 0.298 |
| Carbon emission reduction rate (%) of PVC composition | | 5.7 | 5.7 | 5.7 | 5.6 | 5.6 |

[Table 2]

| | | Comparative Example 1 | Comparative Example 2 | Comparative Example 3 | Comparative Example 4 | Comparative Example 5 | Comparative Example 6 | Comparative Example 7 |
|---|---|---|---|---|---|---|---|---|
| Plasticizer composition (parts by weight) | TOC | - | - | 100 | - | 30 | 5 | 25 |
| | TBC | - | 100 | - | 30 | - | 25 | 5 |
| | R-DEHCH | 100 | - | - | 70 | 70 | 70 | 70 |
| Volatile loss (%) | | 1.80 | 4.80 | 0.50 | 3.00 | 1.50 | 2.80 | 1.50 |
| Gelling time (sec) | | 272 | 200 | 420 | 250 | 310 | 270 | 315 |
| Thermal stability (min) | | 69 | 69 | 40 | 45 | 60 | 62 | 61 |
| Hardness (Share A) | | 84 | 84 | 86 | 89 | 85 | 86 | 85 |
| Transmittance (%) | | 88 | 88 | 88 | 89 | 88 | 88 | 88 |
| Haze (%) | | 4.3 | 4.3 | 6.2 | 7.2 | 4.9 | 5.2 | 4.9 |
| Plasticizer migration (%) | | 0.4 | 0.4 | 0.1 | 0.1 | 0.3 | 0.3 | 0.3 |
| Yellow Index (YI) | | 5.0 | 5.0 | 7.2 | 7.1 | 5.7 | 5.6 | 5.7 |
| Tensile strength ($kgf/cm^2$) | | 229 | 229 | 252 | 278 | 236 | 244 | 237 |
| Elongation (%) | | 270 | 270 | 272 | 320 | 271 | 285 | 273 |
| UV weather resistance | | 13 | 13 | 15 | 15 | 13 | 13 | 13 |
| Carbon emission ($tCO_2$ eq/MT) of plasticizer composition | | 0.565 | 0.571 | 0.571 | 0.567 | 0.567 | 0.567 | 0.567 |
| Carbon emission reduction rate (%) of plasticizer composition | | 13 | 0 | 0 | 10 | 10 | 10 | 10 |
| Carbon emission ($tCO_2$ eq/MT) of PVC composition | | 0.297 | 0.299 | 0.299 | 0.298 | 0.298 | 0.298 | 0.298 |
| Carbon emission reduction rate (%) of PVC composition | | 8.0 | 7.4 | 7.4 | 7.7 | 7.7 | 7.7 | 7.7 |

Referring to Table 1, it was confirmed that the plasticizer compositions of Examples 1 to 5 were excellent in overall physical properties such as volatility resistance, migration resistance, gelling rate, and weather resistance to ultraviolet rays, etc., thereby reducing carbon emissions during the production process.

## Claims

1. A plasticizer composition comprising:

   a first plasticizer represented by the following Formula 1;
   a second plasticizer represented by the following Formula 2; and
   a third plasticizer represented by the following Formula 3, which is obtained from a recycled phthalate-based compound,
   wherein a weight ratio of the first plasticizer and the second plasticizer is more than 1:0.2 to less than 1:5:

   [Formula 1]

   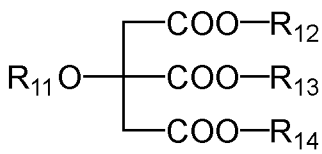

   in Formula 1,

   $R_{11}$ is hydrogen or acetyl,
   $R_{12}$ to $R_{14}$ are each independently $C_{6-10}$ alkyl,

   [Formula 2]

   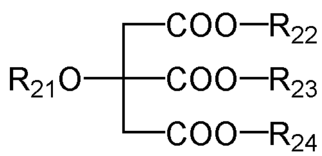

   in Formula 2,

   $R_{21}$ is hydrogen or acetyl,
   $R_{22}$ to $R_{24}$ are each independently $C_{1-4}$ alkyl,

   [Formula 3]

   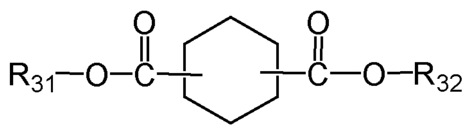

   in Formula 3,
   $R_{31}$ and $R_{32}$ are each independently $C_{4-12}$ alkyl.

2. The plasticizer composition of claim 1, wherein a weight ratio of the first plasticizer and the second plasticizer is 1:0.5 to 1:2.

3. The plasticizer composition of claim 1, wherein the first plasticizer and the second plasticizer are included in an

amount of 7 parts by weight or more, respectively, based on 100 parts by weight of the plasticizer composition.

4. The plasticizer composition of claim 1, wherein the total content of the first plasticizer and the second plasticizer is 20 parts by weight to 60 parts by weight, based on 100 parts by weight of the plasticizer composition.

5. The plasticizer composition of claim 1, wherein the first plasticizer is one or more selected from the group consisting of triethylhexyl citrate, trihexyl citrate, triheptyl citrate, trinonyl citrate, and tridecyl citrate.

6. The plasticizer composition of claim 1, wherein the second plasticizer is one or more selected from the group consisting of trimethyl citrate, triethyl citrate, tripropyl citrate, and tributyl citrate.

7. The plasticizer composition of claim 1, wherein Formula 3 is represented by any one selected from the group consisting of the following Formula 3-1 to Formula 3-3:

[Formula 3-1]

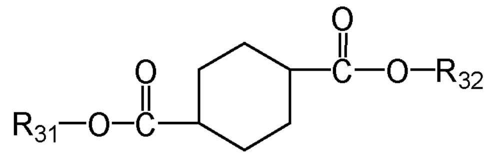

[Formula 3-2]

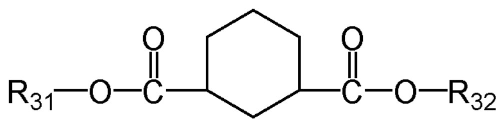

[Formula 3-3]

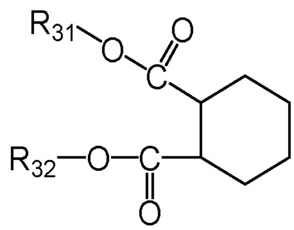

in Formulae 1-1 to 1-3,
$R_{31}$ and $R_{32}$ are each independently a butyl group, an isobutyl group, a pentyl group, a hexyl group, a heptyl group, an octyl group, a 2-ethylhexyl group, a nonyl group, an isononyl group, a 2-propylheptyl group, a decyl group, or an isodecyl group.

8. The plasticizer composition of claim 1, wherein an acid value of the third plasticizer is 0.05 KOH mg/g to 0.2 KOH mg/g.

9. The plasticizer composition of claim 1, wherein the third plasticizer is one or more selected from the group consisting of recycled di(2-ethylhexyl)cyclohexane-1,4-dicarboxylate, recycled diisononylcyclohexane-1,2-dicarboxylate, recycled di(2-ethylhexyl)cyclohexane-1,2-dicarboxylate, recycled butyl(2-ethylhexyl)cyclohexane-1,4-dicarboxylate, and recycled dibutylcyclohexane-1,4-dicarboxylate.

10. The plasticizer composition of claim 1, wherein the plasticizer composition has a volatile loss of 2.6% by weight or less, as measured after being left at 200°C for 24 hours.

11. A vinyl chloride-based resin composition comprising the plasticizer composition of any one of claims 1 to 10; and a

vinyl chloride-based resin.

**12.** The vinyl chloride-based resin composition of claim 11, wherein the plasticizer composition is included in an amount of 10 parts by weight to 200 parts by weight, based on 100 parts by weight of the vinyl chloride-based resin.

**13.** The vinyl chloride-based resin composition of claim 11, further comprising a Ca/Zn-based thermal stabilizer.

**14.** A molded article comprising the vinyl chloride-based resin composition of claim 11.

## INTERNATIONAL SEARCH REPORT

International application No. **PCT/KR2022/018948**

**A. CLASSIFICATION OF SUBJECT MATTER**

**C08K 5/00**(2006.01)i; **C08K 5/11**(2006.01)i; **C08K 5/12**(2006.01)i; **C08K 3/014**(2018.01)i; **C08L 27/06**(2006.01)i

According to International Patent Classification (IPC) or to both national classification and IPC

**B. FIELDS SEARCHED**

Minimum documentation searched (classification system followed by classification symbols)

C08K 5/00(2006.01); C07C 67/02(2006.01); C07C 67/62(2006.01); C07C 69/704(2006.01); C08K 5/10(2006.01); C08K 5/101(2006.01); C08K 5/11(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal), STN (Registry, Caplus), Google & keywords: 가소제(plasticizer), 디(2-에틸헥실)사이클로헥산-1,4-디카르복실레이트(di(2-ethylhexyl)cyclohexane)-1,4-dicarboxylate, DEHCH), 트리부틸시트레이트(tributylcitrate, TBC), 트리에틸헥실시트레이트(triethylhexylcitrate, TOC), 이행(migration)

**C. DOCUMENTS CONSIDERED TO BE RELEVANT**

| Category* | Citation of document, with indication, where appropriate, of the relevant passages | Relevant to claim No. |
|---|---|---|
| Y | KR 10-2017-0121059 A (LG CHEM, LTD.) 01 November 2017 (2017-11-01)<br>See claims 1, 2, 10 and 11; and paragraphs [0005], [0006], [0041], [0052], [0054] and [0139]. | 1-14 |
| Y | KR 10-2021-0092141 A (LG CHEM, LTD.) 23 July 2021 (2021-07-23)<br>See abstract; claims 9 and 10; and paragraphs [0005], [0006], [0130], [0152] and [0164]. | 1-14 |
| A | KR 10-2019-0140831 A (LG CHEM, LTD.) 20 December 2019 (2019-12-20)<br>See paragraphs [0263]-[0264]. | 1-14 |
| A | KR 10-2017-0020282 A (LG CHEM, LTD.) 22 February 2017 (2017-02-22)<br>See entire document. | 1-14 |
| A | KR 10-2002-0085812 A (CELANESE CHEMICALS EUROPE GMBH) 16 November 2002 (2002-11-16)<br>See entire document. | 1-14 |

☐ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **14 March 2023** | **15 March 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
**Information on patent family members**

International application No.
**PCT/KR2022/018948**

| Patent document cited in search report | Publication date (day/month/year) | Patent family member(s) | Publication date (day/month/year) |
|---|---|---|---|
| KR 10-2017-0121059 A | 01 November 2017 | CN 107709429 A | 16 February 2018 |
| | | CN 107709429 B | 20 December 2019 |
| | | CN 107849299 A | 27 March 2018 |
| | | CN 107849299 B | 07 February 2020 |
| | | EP 3293225 A1 | 14 March 2018 |
| | | EP 3293225 A4 | 09 May 2018 |
| | | EP 3293226 A1 | 14 March 2018 |
| | | EP 3293226 A4 | 02 May 2018 |
| | | KR 10-2017-0121060 A | 01 November 2017 |
| | | KR 10-2090294 B1 | 17 March 2020 |
| | | KR 10-2090294 B9 | 11 January 2022 |
| | | KR 10-2090295 B1 | 17 March 2020 |
| | | TW 201806923 A | 01 March 2018 |
| | | TW 201806924 A | 01 March 2018 |
| | | TW I715761 B | 11 January 2021 |
| | | TW I738769 B | 11 September 2021 |
| | | US 11186702 B2 | 30 November 2021 |
| | | US 11407882 B2 | 09 August 2022 |
| | | US 2018-0163018 A1 | 14 June 2018 |
| | | US 2018-0171103 A1 | 21 June 2018 |
| | | WO 2017-183876 A1 | 26 October 2017 |
| | | WO 2017-183877 A1 | 26 October 2017 |
| KR 10-2021-0092141 A | 23 July 2021 | CN 113795542 A | 14 December 2021 |
| | | EP 3950804 A1 | 09 February 2022 |
| | | EP 3950804 A4 | 01 February 2023 |
| | | TW 202132448 A | 01 September 2021 |
| | | US 2022-0227961 A1 | 21 July 2022 |
| | | WO 2021-145643 A1 | 22 July 2021 |
| KR 10-2019-0140831 A | 20 December 2019 | CN 112041383 A | 04 December 2020 |
| | | EP 3808804 A1 | 21 April 2021 |
| | | EP 3808804 A4 | 04 August 2021 |
| | | TW 202000765 A | 01 January 2020 |
| | | US 2021-0230098 A1 | 29 July 2021 |
| | | WO 2019-240409 A1 | 19 December 2019 |
| KR 10-2017-0020282 A | 22 February 2017 | CN 106795325 A | 31 May 2017 |
| | | CN 111732756 A | 02 October 2020 |
| | | CN 111732757 A | 02 October 2020 |
| | | CN 111777796 A | 16 October 2020 |
| | | DE 202016008699 U1 | 13 February 2019 |
| | | EP 3130631 A1 | 15 February 2017 |
| | | EP 3130631 A4 | 12 July 2017 |
| | | EP 3130631 B1 | 01 April 2020 |
| | | EP 3670592 A1 | 24 June 2020 |
| | | EP 3670593 A1 | 24 June 2020 |
| | | ES 2788733 T3 | 22 October 2020 |
| | | KR 10-1674317 B1 | 08 November 2016 |
| | | KR 10-1881646 B1 | 24 July 2018 |
| | | KR 10-2004732 B1 | 29 July 2019 |
| | | KR 10-2016-0099453 A | 22 August 2016 |
| | | KR 10-2016-0130363 A | 11 November 2016 |

Form PCT/ISA/210 (patent family annex) (July 2022)

**INTERNATIONAL SEARCH REPORT**
**Information on patent family members**

International application No.
**PCT/KR2022/018948**

| Patent document cited in search report | Publication date (day/month/year) | Patent family member(s) | Publication date (day/month/year) |
|---|---|---|---|
| | | KR 10-2019-0024935 A | 08 March 2019 |
| | | KR 10-2019-0024936 A | 08 March 2019 |
| | | KR 10-2020-0031588 A | 24 March 2020 |
| | | KR 10-2079234 B1 | 19 February 2020 |
| | | KR 10-2197487 B1 | 31 December 2020 |
| | | TW 201700568 A | 01 January 2017 |
| | | TW I617605 B | 11 March 2018 |
| | | US 11359071 B2 | 14 June 2022 |
| | | US 2017-0081501 A1 | 23 March 2017 |
| | | US 2022-0251336 A1 | 11 August 2022 |
| | | US 2022-0325070 A1 | 13 October 2022 |
| | | WO 2016-129876 A1 | 18 August 2016 |
| KR 10-2002-0085812 A | 16 November 2002 | DE 10122145 A1 | 28 November 2002 |
| | | EP 1256566 A2 | 13 November 2002 |
| | | EP 1256566 A3 | 24 September 2003 |
| | | PL 353721 A1 | 18 November 2002 |
| | | US 2002-0198402 A1 | 26 December 2002 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- KR 1020210174062
- KR 101889540